# EUROPEAN PATENT APPLICATION

(11) **EP 2 432 297 A2**
(43) Date of publication of application: **21.03.2012**
(21) Application number: 11180438.1
(22) Date of filing: 07.09.2011
(51) Int. Cl.: H05B 33/08

(54) **A current limiting circuit, an LED module and an LED illuminating device**

(30) Priority: 18.09.2010 JP 2010210257; 21.07.2011 JP 2011160260
(71) Applicant: Toshiba Lighting & Technology Corporation, Yokosuka-shi Kanagawa (JP)
(72) Inventor: Otake, Hirokazu, Yokosuka-shi, Kanagawa (JP)
(74) Representative: O'Connell, David Christopher

(57) **Abstract**

A current limiting circuit includes a power input terminal that is connected to an output terminal of a direct current power source to which an output capacitor is connected in parallel; a power output terminal to which an LED is connected; and a current limiting unit that supplies to the LED a load current to which an upper current value is set, supplies to the LED a load current lower than the upper current value at a normal condition, and supplies to the LED a load current higher than the load current of the normal condition and equal to or lower than the upper current value at an abnormal condition.

## Description

### FIELD

Embodiments described herein generally relate to a current limiting circuit, and an LED illuminating device.

### BACKGROUND

An LED illuminating device includes both a direct current power source and an LED connected to output terminals of the direct current power source. There are an LED illuminating device that is configured such that a direct current power source and an LED are integrated together and the LED cannot be easily extracted, and an LED illuminating device that is configured such that a direct current power source and an LED can be easily separated. In the latter case, the LED needs to be safely detachable. In this case, the direct current power source is a power source circuit unit capable of turning on the LED by connecting it to the output terminals of the direct current power source. The power source circuit unit is configured by a switching power source that performs a higher frequency operation as a main body.

Meanwhile, a general LED illuminating device has a capacitor connected in parallel to the output terminals of the direct current power source, to bypass higher harmonic components that are contained in the output of the direct current power source.

In the LED illuminating device that includes a direct current power source which has a capacitor connected in parallel to the output terminals, the LED is often extracted from the direct current power source while it is turned on for cleaning or replacement and the LED is mounted again. In this case, when the direct current power source is continuously operating during extraction and mounting of the LED, when the LED is mounted, a transitional oscillation occurs due to an electric charge accumulated in the capacitor and an overcurrent flows to the LED, and this generates a flash or easily breaks the LED.

Therefore, it is possible to arrange in the direct current power source a determining unit that determines a state of extraction and mounting of the LED and also arrange in the direct current power source a safety circuit that performs a safety operation by stopping an output of the direct current power source when the determining unit determines an extraction state. When the determining unit determines a mounting of the LED again, the direct current power source can be operated again. With the arrangement, generation of a flash due to the overcurrent flow to the LED and breaking of the LED can be avoided.

An LED module such as a straight tube type LED lamp, for example, is in a product mode that is handled separately from a direct current power source. Therefore, in the case of the kind of an LED module, it is not known to what kind of a direct current power source the LED module is to be connected. Consequently, there is a risk of occurrence of a trouble, depending on a direct current power source to be used. For example, there is a risk that an LED module is turned on by being connected to a direct current power source of which a load current in a normal time is different. Further, there is a risk that an LED module does not include a safety circuit and that, even when the LED module includes a safety circuit, a specification of the safety circuit for a safety operation is not suitable for the LED module to be used.

When a combination of an LED and a direct current power source that turns on the LED is unsuitable, there is a risk that either or both of the LED and the direct current power source perform abnormal operations, and these generate an abnormal heating or breakage. Particularly, when an LED module and the like are handled separately from a direct current power source to which the LED module is to be fitted, a problem easily occurs.

Even when a direct current power source includes a circuit configuration that determines whether an LED is mounted and that performs a safety operation following the determination, a complex configuration of the circuit that performs the determination and safety operation increases cost, and this is not preferable.

Further, even when a direct current power source includes a safety circuit, the direct current power source stops its output when the LED is extracted, and the direct current power source operates again when the LED is mounted. Therefore, when the LED is extracted and mounted frequently due to an external oscillation and the like, control hunting occurs, and a current stress easily occurs in a switching element and the like. This has a problem in that operations of either or both the LED and the direct current power source become unsuitable.

### BRIEF DESCRIPTION OF THE DRAWINGS

Fig. 1 is a block circuit diagram according to a first embodiment;
Fig. 2 is a block circuit diagram according to a second embodiment;
Fig. 3 is a partially cut-out front view of an LED module according to the second embodiment together with a socket;
Fig. 4 is a circuit diagram according to a third embodiment;
Fig. 5 is a graph showing a load current rising characteristic when an LED is mounted according to the third embodiment;
Fig. 6 is a circuit diagram showing a current limiting circuit according to a fourth embodiment;
Fig. 7 is a graph showing a load current rising characteristic when an LED is mounted according to the fourth embodiment;
Fig. 8 is a circuit diagram showing a current limiting circuit according to a fifth embodiment;
Fig. 9 is a graph showing a load current rising characteristic when an LED is mounted according to the fifth embodiment;
Fig. 10 is a circuit diagram according to a sixth embodiment; and
Fig. 11 is a circuit diagram according to a seventh embodiment.

### DETAILED DESCRIPTION

In view of the above circumstances, the embodiments provide a current limiting circuit that solves the above-described problems by limiting a current such that a load current of an LED at an abnormal time becomes equal to or lower than a current upper limit value, and an LED module and an LED illuminating device that include the current limiting circuit.

According to one aspect of the embodiments, a current limiting circuit includes a power input terminal that is connected to an output terminal of a direct current power source to which an output capacitor is connected in parallel; a power output terminal to which an LED is connected; and a current limiting unit that supplies to the LED a load current to which an upper current value is set, supplies to the LED a load current lower than the upper current value at a normal condition, and supplies to the LED a load current higher than the load current of the normal condition and equal to or lower than the upper current value at an abnormal condition.

According to one aspect of the embodiments, it is possible to provide the current limiting circuit that supplies to the LED a load current to which a current upper limit value is set, supplies to the LED a load current lower than the current upper limit value at a normal time, and supplies to the LED a load current higher than the load current of the normal time and equal to or lower than the current upper limit value at an abnormal time, thereby avoiding abnormal operations of either or both the LED and the direct current power source, a continuous abnormal heating, and breakage, and the LED module and the LED illuminating device that include the current limiting circuit.

### [First embodiment]

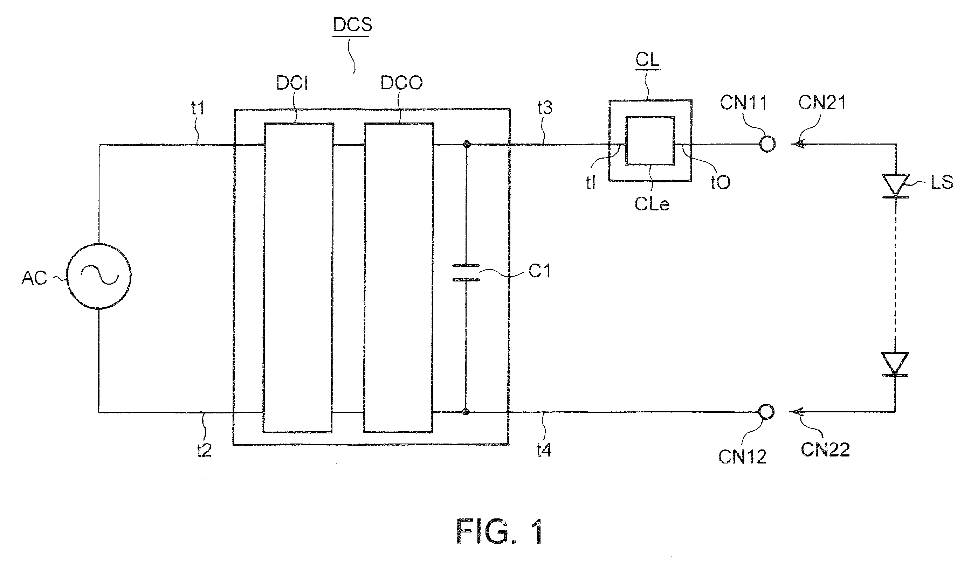

A first embodiment will be described with reference to Fig. 1. Fig. 1 shows a current limiting circuit CL and an LED illuminating device according to the embodiment. The LED illuminating device includes a direct current power source DCS, the current limiting circuit CL, and an LED LS. The direct current power source DCS, the current limiting circuit CL, and the LED LS will be described.

### (Direct current power source DCS)

The direct current power source DCS is a power source that energizes the LED LS and turns it on by supplying a load current to the LED LS via the current limiting circuit CL described later. The direct current power source DCS is configured to include a power source input unit DCI and a power source output unit DCO.

The power source input unit DCI supplies direct current power that is required by the power source output unit DCO to the power source output unit DCO as its input. The power source input unit DCI can be in any mode of outputting required direct current power. For example, various known modes such as a rectifying direct current power source and a battery power source can be suitably employed. Fig. 1 shows an example that the power source input unit DCI is configured by a rectifying direct current power source, as a main body, that rectifies alternate current power that is input from input terminals t1, t2 of the power source output unit DCO and converts the power into direct current power, to obtain input power of the power source output unit DCO from an external alternate current power source AC.

The power source output unit DCO is a circuit that converts direct current power supplied from the power source input unit DCI into required direct current power and outputs the direct current power to the LED LS, to turn on the LED LS by energizing the LED LS as a load. An output capacitor C1 is connected in parallel to a pair of output terminals t3, t4 of the power source output unit DCO. Therefore, the output terminals t3, t4 constitute the output terminals of the direct current power source DCS. The output terminals t3, t4 are connected to connector receivers CN11, CN12 in series via the current limiting circuit LC described later. The connector receivers CN11, CN12 are permitted to be in an aspect of a socket such that the LED LS described later can be extracted or detached from the socket. Therefore, in the above aspect, connectors CN21, CN22 of the LED LS are permitted to form an aspect of a bayonet cap that is mounted to and dismounted from the socket.

Although the power source output unit DCO has the output capacitor C1 connected in parallel to between the output terminals thereof, other configurations are flexible. For example, the power source output unit DCO is permitted to be configured by a switching power source or other known direct current power source as a main body.

The output capacitor C1 bypasses higher harmonic components from a load current that is supplied from the power source output unit DCO to the LED LS. Therefore, the LED LS as a load is energized by a direct current from which a part of or most of higher harmonic components are removed by the bypass.

The switching power source is generally known as a DC/DC converter having high circuit efficiency, and is therefore, a preferred main circuit unit of the power source output unit DCO in the direct current power source DCS according to the embodiment. The switching power source is a power source device using a switching element to convert and adjust power in a power converting device that obtains desired output power from input power. For example, the switching power source is permitted to be any of a chopper (a step-down type, a step-up type, and a step-up and step-down type), a flyback converter, a forward converter, and a switching regulator.

The power source output unit DCO can have either a safety circuit arranged therein to suppress occurrence of an overcurrent or a safety circuit not arranged therein. When the power source output unit DCO includes a safety circuit, the current limiting circuit CL operates to perform a protection operation such that an overcurrent does not flow to the LED LS as a load and the safety circuit of the direct current power source DCS operates, when an abnormality occurs. When the power source output unit DCO does not include a safety circuit, the current limiting circuit CL operates to perform a protection operation, and can avoid a risky state.

### (LED LS)

The LED LS is detachably connected to the output terminals t3, t4 of the direct current power source DCS, in the embodiment. In this case, that the LED LS is detachable is in a state that the LED LS can be mounted to and dismounted from the output terminals t3, t4 of the direct current power source DCS, and a detailed structure is not particularly limited. The pair of connectors CN21, CN22 are provided at both ends of the LED LS. The connectors CN21, CN22 can be used as a bayonet cap of a straight tube type LED lamp, and the connector receivers CN11, CN12 that are arranged in the output terminals t3, t4 of the direct current power source DCS can be configured as a socket corresponding to the bayonet cap, for example. Further, various configurations are permitted such as a dielectric-coated conductor can be led out from the LED LS, and electric connectors can be connected to a front end of the conductor. Based on the configuration, by mounting the bayonet cap of the LED LS and the electric connectors to the socket or the electric connector receivers that are arranged in the output terminals t3, t4 of the direct current power source DCS, the LED LS can be detachably connected to the output terminals t3, t4 of the direct current power source DCS.

### (Current limiting circuit CL)

The current limiting circuit CL includes the input terminal t1, an output terminal t0, and a current limiting unit CLe, and is interposed between the output terminals t3, t4 of the direct current power source DCS and the LED LS- The input terminal t1 is connected to the output terminal t3 of the direct current power source DCS to which the output capacitor C1 is connected in parallel. The LED LS is connected to the output terminal t0. The current limiting unit CLe supplies a load current to which a current upper limit value is set, in a state that the input terminal t1 is connected to the output terminal t3 of the direct current power source DCS and the LED LS is connected to the output terminal t0. At a normal time, the current limiting unit CLe supplies a load current lower than the current upper limit value to LED LS. At an abnormal time, the current limiting unit CLe supplies a load current higher than the load current of the normal time and also equal to or lower than the current upper limit value to the LED LS. The above current upper limit value is set to a permissible current level that is higher than the load current of the normal time but does not cause the LED LS to generate a flash or to be broken at the abnormal time. That is, the current upper limit value is at a current level higher than the load current that flows to the LED LS at the normal time, but is a value close to the load current at the normal time as far as possible. In conclusion, the currents upper limit value is at a current level preferably about 7% to 15% higher than the load current of the normal time.

In the embodiment, the abnormal time is a state that an abnormal overcurrent flows to the LED LS and generates an inconvenience that the LED LS generates a flash or is broken. Main examples are a state that a transient oscillation occurs due to an electric charge that is accumulated in the output capacitor connected in parallel to between the output terminals t3, t4 of the direct current power source DCS, and an overcurrent flows to the LED, a state that an overcurrent flows due to an abnormality of the LED LS as a load, and a state that an overcurrent flows to the LED LS because the LED LS is mounted to a direct current power source of a load current that is different (for example, high from a load current of the normal time.

The current limiting circuit CL is connected such that it is interposed between substantive output terminals of the direct current power source DCS, that is, a position on the circuit where the output of the direct current power source DCS is substantively obtained, and the LED LS. Therefore, the current limiting circuit CL is permitted to form the following aspects.
(1) The current limiting circuit CL is arranged at a direct current power source DCS side, and forms a part of the apparent direct current power source DCS. The embodiment shown in Fig. 1 shows an example of the aspect, and the current limiting circuit CL has the input terminal t1 connected to the output terminal t3 of the direct current power source DCS and has the connector receiver CN11 connected to the output terminal t0 of the current limiting circuit CL.
(2) The current limiting circuit CL is not incorporated in any of the direct current power source DCS and the LED LS, and is configured to be independent of the direct current power source DCS and the LED LS .
(3) The current limiting circuit CL is arranged at an LED LS side. In this aspect, the current limiting circuit CL is integrated with the LED LS. For example, the current limiting circuit CL is arranged within a straight tube type LED lamp, and constitutes an LED module.
(4) The direct current power source DCS, the current limiting circuit CL, and the LED LS are integrated. For example, the current limiting circuit CL constitutes a module such as a bulb LED lamp. In the case of the bulb LED lamp, a lighting system is configured by mounting the lamp on a socket, for example, on a screw socket, a hook type socket, etc.

Next, a circuit operation according to the first embodiment will be described. In Fig. 1, when the alternate current power source AC is turned on in a state that the LED LS is mounted between the output terminals t3, t4 of the direct current power source DCS, the direct current input unit DCI rectifies the alternate current voltage, smoothes the voltage, and applies a direct current voltage to an input side of the direct current output unit DCO. A load current that is output from the direct current output unit DCO flows to the LED LS as a load, and the LED LS is energized and is turned on. This state is the normal time, and the current limiting circuit CL does not operate.

On the other hand, when the LED LS is extracted from an output side of the direct current power source DCS while the LED LS is lighted, the direct current power source DCS performs an unloaded operation, but continues operation. Next, when the LED LS is mounted again on the output terminals t3, t4 of the direct current power source DCS, the load accumulated in the output capacitor C1 connected to an output side of the direct current power source DCS generates a transient oscillation, and a rush current rapidly flows to an LED LS side. However, in this case, the current limiting circuit CL operates and limits the rush current flowing to the LED LS to a value not exceeding the current limit value although higher than a load current of the normal time. However, the load current continues flowing without stopping. As a result, the LED LS can be turned on by avoiding the occurrence of such an inconvenience that the LED LS generates a flash and is broken. When the transient oscillation ends, the current limiting circuit CL stops the above operation, and the LED LS returns to normal lighting.

In the aspect of the abnorma time when the LED LS is turned on by mounting the LED LS on the direct current power source DCS of which a load current of the normal time is large from the viewpoint of the LED LS, an overcurrent flows while the LED LS is being connected to the direct current power source DCS. Therefore, when the LED LS is not based on the embodiment, an inconvenience easily occurs that the LED LS generates a flash and is broken. On the other hand, in the embodiment, because the current limiting circuit CL is provided, a load current equal to or lower than the current upper limit value although higher than the load current of the normal time keeps flowing, and this does not generate the above inconvenience.

A case where the direct current power source DCS includes a safety circuit (not shown) will be described next. In this case, the current limiting circuit CL operates at the abnormal time. Therefore, a load current equal to or lower than the current upper limit value although higher than the load current of the normal time flows. However, an output voltage of the direct current power source DCS increases and the incorporated safety circuit operates. The direct current power source DCS performs a safety operation by either stopping the output or reducing the output (dimmed), thereby securing safety. Whether the output is stopped or the output is reduced by the safety operation can be set in advance. As is clear from the above explanation, according to the embodiment, even when the direct current power source DCS does not include the safety circuit, the LED LS can be protected from an overcurrent. In the aspect that the direct current power source DCS includes the safety circuit, a safety operation is added, and therefore, safety can be further ensured.

Other embodiments will be described below. In the drawings showing the embodiments, portion that are the same as those in Fig. 1 are assigned with the same reference numbers, and their explanation is omitted.

### [Second embodiment]

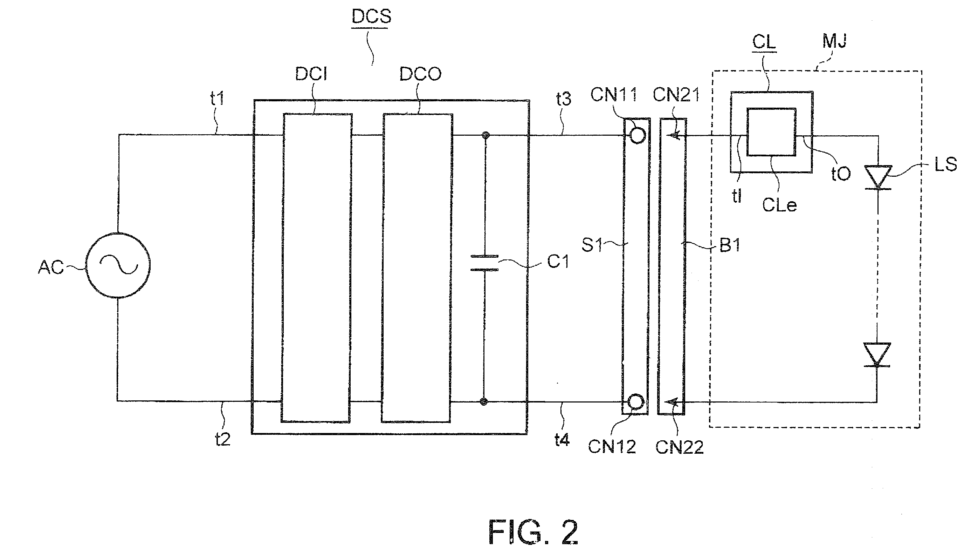

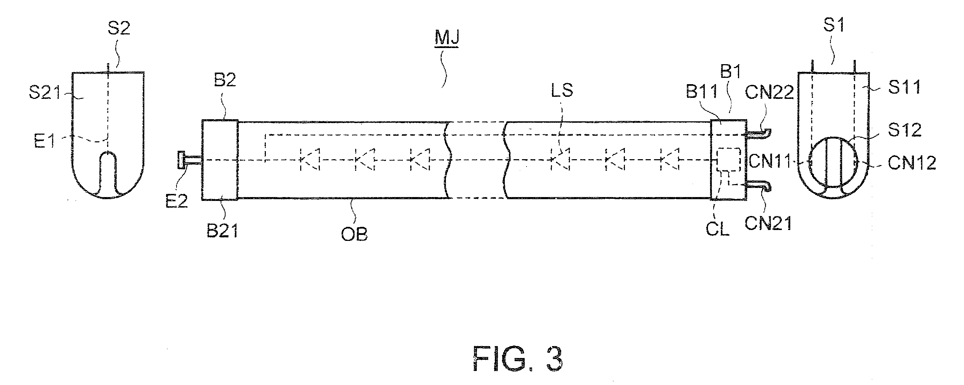

A second embodiment will be described with reference to Figs. 2 and 3. Figs. 2 and 3 show a current limiting circuit CL, an LED module MJ, and an LED illuminating device according to the embodiment. The LED module MJ includes power receiving terminals CL21., CN22, a current limiting circuit CL, and an LED LS. The LED module MJ is a lighting system that uses the LED LS, in which the LED LS is a constituent element that can be exchanged in the lighting system. Specifically, the LED module MJ forms a mode of a straight tube type LED lamp and the like, for example. In the case of a straight tube type LED lamp, a lighting system is configured by mounting the straight tube type LED lamp on the sockets S1, S2 that are arranged at a direct current power source DCS side.

The LED module MJ in Fig. 3 shows a concrete example of a straight tube type LED lamp, and a corresponding pair of sockets S1, S2. That is, the LED module MJ includes a translucent outer tube bulb OB, a pair of bayonet caps B1, B2, the LED LS, and the current limiting circuit CL, and presents an appearance approximately similar to that of a known straight tube type fluorescent lamp.

The translucent outer tube bulb OB is made of a translucent slender plastic tube.

The bayonet cap B1 includes a cap-shaped bayonet cap body B11, and a pair of power receiving terminals CN21, CN22, and blocks an opening at one end of the translucent outer tube bulb OB. The pair of power receiving terminals CN21, CN22 are power receiving terminals, and are connected to a pair of power feeding terminals CN11, CN12 of the socket S1 connected to the output terminals t3, t4 of the direct current power source DCS, thereby connecting the LED module MJ to the direct current power source DCS.

The bayonet cap 82 includes a cap-shaped bayonet cap body B21 and a ground terminal E2, and blocks an opening at the other end of the translucent outer tube bulb OB. A ground terminal E1 does not need to be grounded.

The LED LS is configured by connecting a plurality of LED chips that are suitably connected, such as in series connection, between the pair of power receiving terminals CN21, CN22, as shown in Fig. 3, for example. Further, the LED LS is suitably arranged and accommodated in the translucent outer tube bulb OB.

The current limiting circuit CL has a circuit configuration similar to that of the first embodiment, and is connected between the pair of power receiving terminals CN21, CN22 by forming a series circuit with the LED LS. Further, the current limiting circuit CL is arranged at an internal position of the bayonet cap body B21, for example, within the translucent outer tube bulb OB.

The socket S1 corresponds to the bayonet cap B1 of the LED module MJ, that is, the straight tube type LED lamp, and is arranged in an illuminator main body (not shown) that incorporates the direct current power source DCS . The socket S1 is fitted to the socket main boy case B11 and the main body of the illuminator. The pair of power feeding terminals CN11, CN12 are connected to the output terminal t3, t4 of the direct current power source DCS, and are arranged within the socket main boy case B11. A rotor S12 has a vertical trench at a front center, and is rotatably arranged at the front within the socket main boy case B11.

The socket S2 corresponds to the bayonet cap B2, and incorporates a ground contactor E1 within the socket main body case B21.

The LED illuminating device is configured to include the direct current power source DCS, the current limiting circuit CL, and the LED described above. The LED LS and the current limiting circuit CL constitute the LED module MJ together with the power receiving terminals.

At the time of mounting the LED module MJ, that is, the straight tube type LED lamp, between the sockets S1 and S2 of the illuminator main body, the pair of power receiving terminals CN21, CN22 of the LED module MJ and the rotor B12 of the socket S1 are matched at a vertical position shown in Fig. 3. Next, after inserting the straight tube type LED lamp from below in the drawing, the straight tube type LED lamp is rotated by 90° relative to the socket main body S11 together with the rotor S12. Based on the mounting operation, the pair of power receiving terminals CN21, CN22 of the straight tube type LED lamp and the power feeding terminals CN11, CN12 of the socket S1 are connected respectively. Prior to the above mounting operation, the ground terminal E1 of the bayonet cap B2 at the other side is inserted into the socket S2.

In the second embodiment, the current limiting circuit CL is built in the LED module MJ. Therefore, even at the abnormal time when the LED module MJ is erroneously mounted to the direct current power source DCS of which a load current at the normal time is larger than the load current of the LED module MJ, the load current is suppressed to equal to or lower than the current limit value. Consequently, the LED module MJ can be protected. Needless to mention, at the abnormal time when a transient oscillation occurs due to an electric charge of the output capacitor C1 when the LED module MJ is mounted again after the LED module MJ so far connected to the output terminals t3, t4 of the direct current power source DCS to which the output capacitor C1 is connected in parallel is disconnected, an overcurrent is suppressed, and the load current higher than the load current of the normal time and equal to or lower than the current limit value is supplied to the LED LS and the LED LS is protected.

### [Third embodiment]

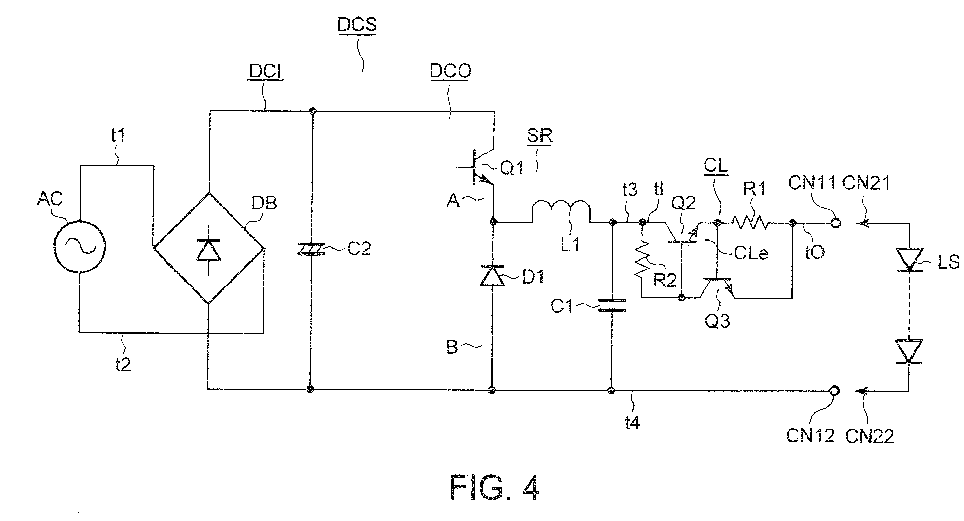

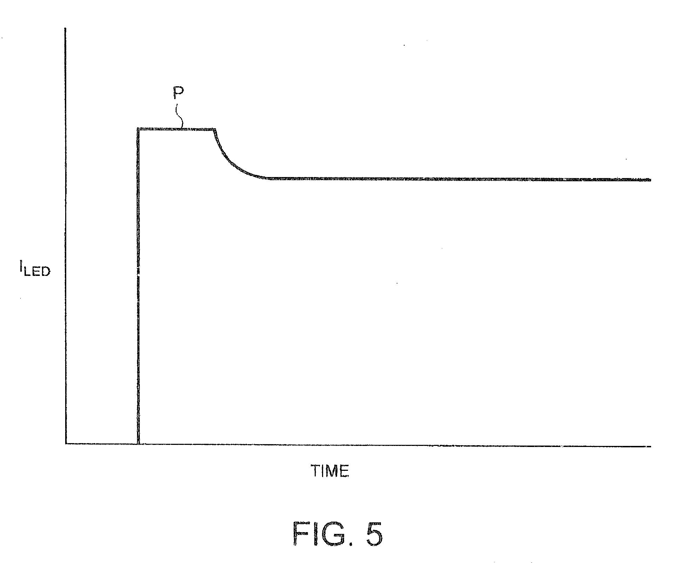

A third embodiment will be described with reference to Figs. 4 and 5. Fig. 4 shows the current limiting circuit CL and the LED illuminating device according to the third embodiment.

In the LED illuminating device according to the third embodiment, the power source input unit DCI of the direct current power source DCS includes a bridge-type full-wave rectifying circuit DB and a smoothing electrolytic capacitor C2 connected between direct current output terminals of the circuit.

The power source output unit DCO of the direct current power source DCS is configured by a switching power source SR as a main body. The switching power source SR is made of a non-isolated buck-boost DC/DC converter. That is, a first circuit A made of a series circuit of a switching element Q1, an inductor L1, and an output capacitor C1 is connected to the output terminals of the direct current power source DCS. Further, a second circuit B that is made of a closed circuit having s series circuit of the output capacitor C1 and a diode D1 connected at both ends of the inductor L1 in a polarity shown is formed. Although not shown, the power source output unit DCO has a control circuit configured such that a current detector that is connected in series to the switching element Q1, for example, detects a current that flows to the switching element Q1 and performs a constant-current control of the switching element Q1 by a load feedback control, thereby lighting the LED LS by the constant-current control.

In the current limiting circuit CL according to the third embodiment, the current limiting unit CLe is configured by using a constant current circuit. The constant current circuit is configured by a pair of transistors Q2, Q3 and a pair of resistors R1, R2. More specifically, a series circuit of a collector/emitter of the transistor Q2 and the resistor R1 is connected in series between the capacitor, C1 and the LED LS. A base of the transistor Q2 is connected to a collector of the transistor Q2 via the resistor R2. Further, the base of the transistor Q2 is connected between the resistor R1 and the output terminal t3 via a collector/emitter of the transistor Q3, and a base of the transistor Q3 is connected to an emitter of the transistor Q2.

In the LED illuminating device according to the third embodiment, when the alternate current power source AC is turned on to turn on the switching element Q1, an increased current flows to the first circuit A of the switching power source SR, and an electromagnetic energy is accumulated in the inductor L1. When the increased current reaches a predetermined value, the switching element Q1 is turned off. At the same time, a reduced current flows from the inductor L1 to the inside of the second circuit B. When the reduced current becomes 0, the switching element Q1 is turned on again. By repeating the above operation, a voltage lower than the output voltage of the direct current source DC appearing at both ends of the output capacitor C1 is output and is applied to the LED LS. As a result, a current that is constant-current controlled flows to the LED LS via the current limiting circuit CL, and the LED LS is turned on.

When the LED LS is extracted from the output terminals t3, t4 of the power source output unit DCO, the power source output unit DCO continues operation in a non-loaded state. Therefore, the output capacitor C1 becomes in a state of being accumulated with an electric charge. In this state, the current limiting circuit CL does not operate.

When the LED LS is mounted to the output terminals t3, t4 of the operating power source output unit DCO, the electric charge of the output capacitor C1 transiently flows into the LED LS via the current limiting circuit CL. In this case, the current limiting circuit CL performs a constant-current operation at or below the current upper limit value. Therefore, a peak of a rush current is cut at the current limit value as indicated by P in Fig. 5. The current in this case is suppressed to a constant value of a load current I_{LED} of the current limit value of a low value to such an extent that an inconvenience does not occur although the current is higher than a rated load current.

More specifically, when the current is equal to or lower than the rated load current, the transistor Q2 is kept on because a base potential is equal to a collector potential via the resistor R2. When a rush current flows due to an electric charge of the capacitor C1, a voltage fall of the resistor R1 exceeds a predetermined value, and therefore, a base current of the transistor Q3 increases and makes conductive between the collector and the emitter. Consequently, a base potential of the transistor Q2 becomes low, and a degree of conduction between the collector and the emitter of the transistor Q2 becomes low. As a result, the rush current becomes constant at the predetermined level P, and becomes a constant current.

In the current limiting circuit CL according to the third embodiment, the current limiting unit CLe is configured by a constant current circuit using a transistor, and therefore, a response of the circuit becomes quick. Consequently, even when mounting and dismounting of the LED LS occurs repeatedly at a short time interval due to oscillation applied from the outside, for example, the current limiting circuit CL performs a protection operation in a satisfactory response.

### [Fourth embodiment]

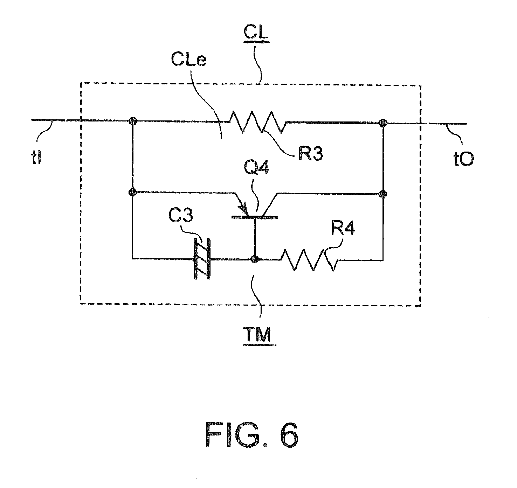

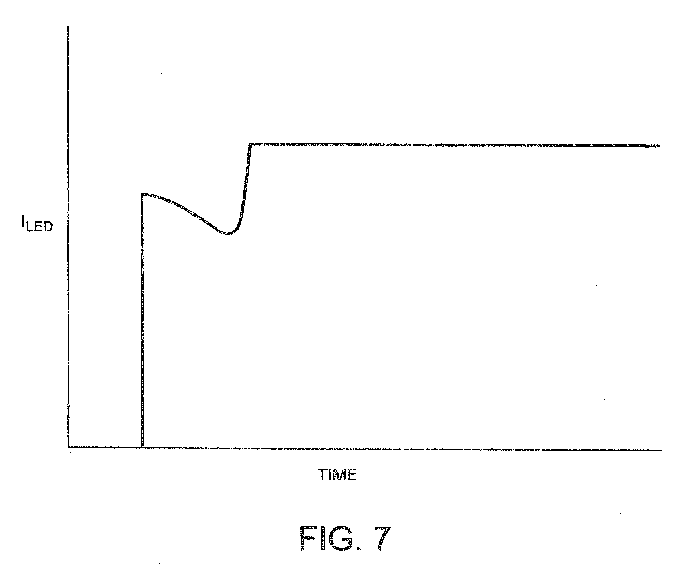

A fourth embodiment will be described with reference to Figs. 6 and 7. Fig. 6 shows a current limiting circuit according to the fourth embodiment. The current limiting circuit CL has its current limiting unit CLe configured by a resistor R3 and a timer TM.

The resistor R3 is connected in series between the direct current power source DCS and the LED LS as a load. When the LED LS is connected to the output terminals of the direct current power source DCS, a rush current generated by an electric charge of the output capacitor C1 is decreased to about a desired level.

The timer TM short-circuits the resistor R3 after a predetermined time since a load current starts flowing by connecting or mounting the LED LS to the output terminals of the direct current power source DCS. The timer TM is configured as follows, for example, although the configuration is not particularly limited. The timer TM is configured by a semiconductor switch Q4 that short-circuits the resistor R3, and a time constant circuit that is made of a capacitor C3 and a resistor R4 controlling the semiconductor switch Q4, that is connected in parallel to the semiconductor switch Q4, and that has a connection point of the capacitor C3 and the resistor R4 connected to a control terminal of the semiconductor switch Q4.

In the fourth embodiment, when the LED LS is mounted, the resistor R4 is inserted in series with the LED LS. Because the resistor R4 performs a strong current-limiting operation, occurrence of a rush current is suppressed as shown in Fig. 7. Because a current-limiting characteristic changes corresponding to a resistance value of the resistor R4, a suitable resistance value can be selected. After a predetermined time of a flow of a rush current pasts, the timer TM short-circuits the resistor R4. As a result, the load current I_{LED} of the normal time flows.

### [Fifth embodiment]

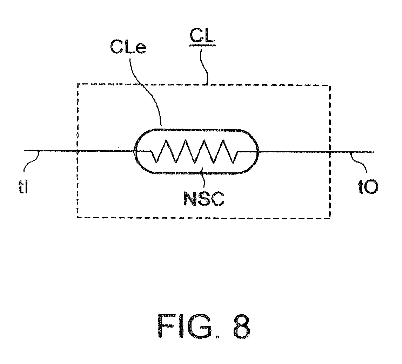

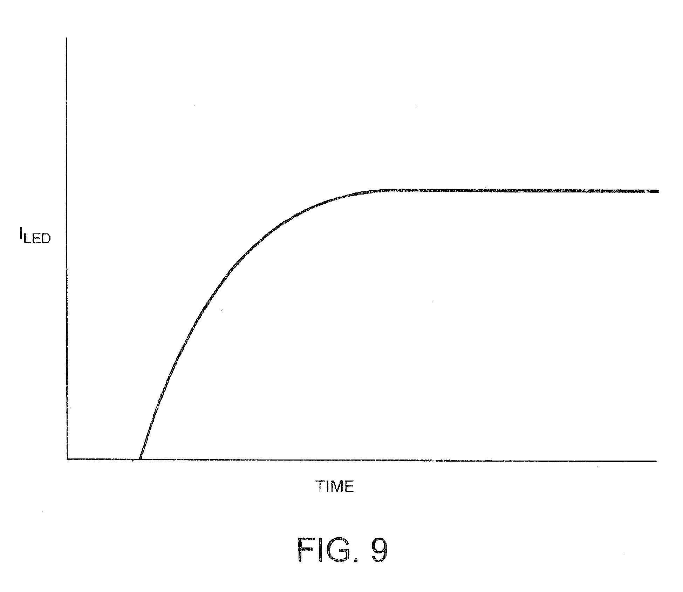

A fifth embodiment will be described with reference to Figs. 8 and 9. Fig. 8 shows the current limiting circuit CL according to the fifth embodiment. The current limiting circuit CL has its current limiting unit CLe configured by a negative characteristic thermistor NTC. The negative characteristic thermistor NTC is inserted into between the direct current power source DCS and the LED LS.

In the embodiment, a current-limiting characteristic as shown in Fig. 9 is obtained. That is, in a state that the LED LS is extracted from the direct current power source DCS, a load current does not flow. Therefore, the negative characteristic thermistor NTC is cool, and a resistance of the current limiting circuit CL is small. In this state, when the LED LS is connected to the output terminals of the direct current power source DCS, a current due to an electric charge of the output capacitor C1 flows into the negative characteristic thermistor NTC. Accordingly, a resistance value of the negative characteristic thermistor NTC increases, and a rush current is suppressed.

### [Sixth embodiment]

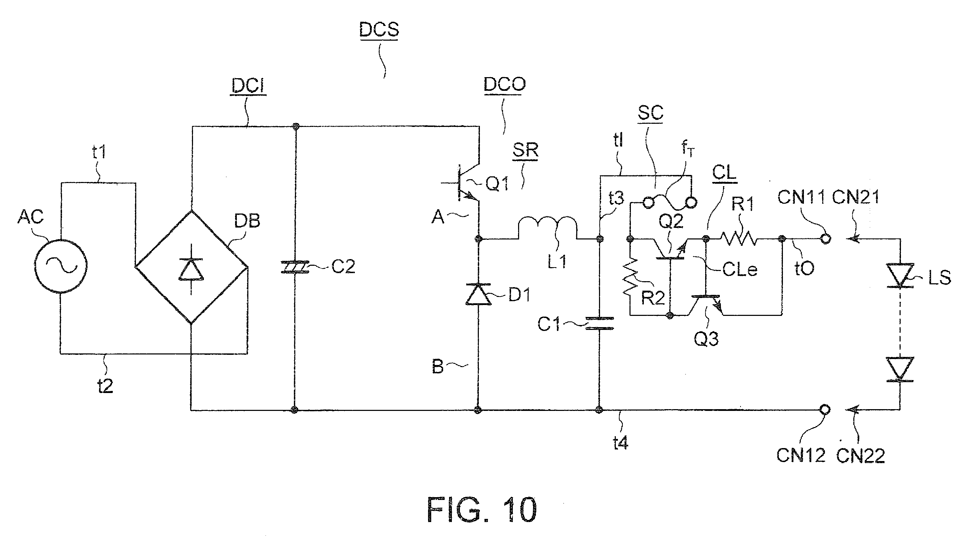

A sixth embodiment will be described with reference to Fig. 10. Fig. 10 shows the LED illuminating device and the current limiting circuit CL according to the sixth embodiment. The current limiting circuit CL includes, in addition to the current limiting unit CLe, a safety circuit SC that performs a safety operation by detecting an abnormal time such as a load abnormality when a load current higher than a load current of the normal time and equal to or lower than the current upper limit value is supplied or an abnormality of the current limiting circuit CL itself.

The safety circuit SC is a unit that performs a safety operation by detecting an abnormal time when a load current higher than a load current of the normal time and equal to or lower than the current upper limit value is supplied. The safety operation is as follows. When a load current of the abnormal time flows such as when a load is abnormal or when the current limiting circuit CL is abnormal, for example, the safety circuit detects an abnormality based on a temperature increase at this time, and releases the LED LS from the direct current power source DCS in response to the abnormality. According to the embodiment shown in Fig. 10, the circuit detects the abnormal time of a load abnormality or abnormality of the current limiting circuit CL, based on a temperature. That is, a temperature fuse f_{T} is arranged to respond to a temperature of the semiconductor switch Q2 of the current limiting circuit CL, and is also connected in series to a conductor that connects between the direct current power source DCS and the LED LS.

A circuit operation will be described next. At the abnormal time such as when the LED LS as a load becomes abnormal or when the current limiting circuit CL is abnormal, a load current higher than a load current of the normal time and equal to or lower than the current upper limit value is supplied. Therefore, at the abnormal time, a temperature of the transistor Q2 of the current limiting circuit CL becomes higher than a temperature at the normal time. In this case, the temperature fuse f_{T} of the safety circuit SC is fused in response to the temperature of the transistor Q2. As a result, the LED LS as a load is released from the direct current power source DCS, and therefore, safety is ensured. The safety operation can be also such that the LED LS is dimmed by reducing the output of the direct current power source DGS instead of releasing the direct current power source DCS.

The sixth embodiment is suitable when the LED LS constitutes the LED module MJ similar to that in the second embodiment. That is, when the LED LS constitutes the LED module MJ, the direct current power source DCS to be used in combination with the LED module MJ is not specified. Therefore, there is a risk that the LED LS is erroneously connected to the direct current power source DCS of a load current of the normal time that is higher than a load current of the normal time of the LED module MJ. There is also a risk that the LED LS is connected to the direct current power source DCS that does not include a safety circuit. However, even in this case, because the current limiting circuit CL includes the safety circuit SC, the safety circuit can ensure safety of the LED module MJ by performing a safety operation when detecting the abnormal time.

### [Seventh embodiment]

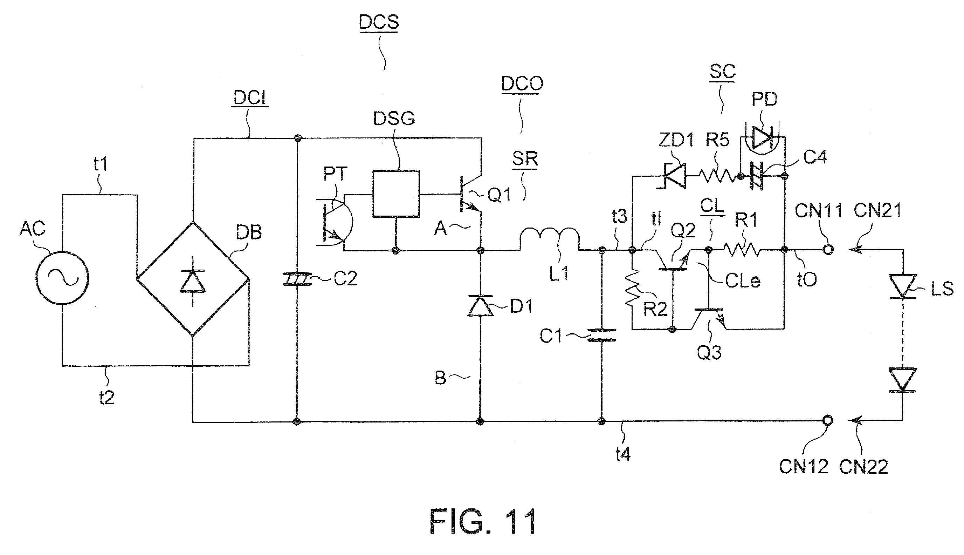

A seventh embodiment will be described with reference to Fig. 11. Fig. 11 shows the LED illuminating device and the current limiting circuit CL according to the seventh embodiment. In the embodiment, the safety circuit SC electrically detects an abnormality such as a load abnormality and an abnormality of the current limiting circuit CL, and controls operation of the direct current power source DCS. That is, when the load is abnormal or when the current limiting unit CL becomes abnormal, a voltage of the current limiting unit CL increases, and a load current higher than a load current of the normal time and equal to or lower than the current upper limit value is supplied. Therefore, the safety circuit SC is configured to electrically detect the voltage increase.

In the safety circuit SC, a series circuit of a Zener diode ZD1, a resistor R5, and a capacitor C4 are connected in parallel to the current limiting circuit CL, and a photodiode PD of the photocoupler is connected in parallel to the capacitor C4. A phototransistor PT of the photocoupler is connected to control a drive signal generating circuit DSG of the switching element Q1 of the direct current power source DCS.

When a voltage of the current limiting circuit CL increases due to a load abnormality or an abnormality of the current limiting circuit CL, and when consequently the voltage exceeds a Zener voltage of the Zener diode ZD1, the photodiode PD of the photocoupler emits light, and the phototransistor PT receives the light. When the phototransistor PT receives the light, the drive signal generating circuit DSG is controlled, and the switching power source SR stops or reduces the output. Consequently, the LED LS is turned off, or is dimmed. As a result, the load current is interrupted or reduced (dimmed), thereby ensuring safety at an abnormal time.

The seventh embodiment is particularly suitable when the LED LS constitutes the LED module MJ, in a similar manner to that in the sixth embodiment.
While certain embodiments have been described, these embodiments have been presented by way of example only, and are not intended to limit the scope of the inventions. Indeed, the novel methods and systems described herein may be embodied in a variety of the other forms; furthermore, various omissions, substitutions and changes in the form the methods and systems described herein may be made without departing from the sprit of the inventions. The accompanying claims and their equivalents are intended to cover such forms or modifications as would fall within the scope and spirit of the inventions.

## Claims

1. A current limiting circuit comprising:
a power input terminal that is connected to an output terminal of a direct current power source to which an output capacitor is connected in parallel;
a power output terminal to which an LED is connected; and
a current limiting unit that supplies to the LED a load current to which an upper current value is set, supplies to the LED a load current lower than the upper current value at a normal condition, and supplies to the LED a load current higher than the load current of the normal condition and equal to or lower than the upper current value at an abnormal condition.

2. The current limiting circuit according to claim 1, further comprising,
a safety circuit that performs a safety operation by detecting the abnormal condition wherein a current higher than the load current of the normal condition and equal to or lower than the upper current value is supplied.

3. An LED illuminating device comprising:
a direct current power source including an output terminal to which an output capacitor is connected in parallel;
a current limiting circuit including, a power input terminal that is connected to an output terminal of a direct current power source to which an output capacitor is connected in parallel; a power output terminal to which an LED is detachably connected; and a current limiting unit that supplies to the LED a load current to which an upper current value is set, supplies to the LED a load current lower than the upper current value at a normal condition, and supplies to the LED a load current higher than the load current of the normal condition and equal to or lower than the upper current value at an abnormal condition.

4. An LED module comprising:
a power receiving terminal that is connected to an output terminal of a direct current power source to which an output capacitor is connected in parallel; a power output terminal to which an LED is connected; and
a current limiting circuit that supplies to the LED a load current to which an upper current value is set, supplies to the LED a load current lower than the upper current value at a normal condition, and supplies to the LED a load current higher than the load current of the normal condition and equal to or lower than the upper current value at an abnormal condition.

5. An LED illuminating device comprising:
a direct current power source having a power source input unit that is connected to an alternate current power source and that converts an alternate into a direct current, and a power source output unit that is connected to a power source input terminal and that converts converted direct current into a predetermined value and outputs;
a current limiting circuit that is connected to the power source output unit and that supplies a load current equal to or lower than a predetermined upper current value; and
an LED that is detachably connected to the current limiting circuit.

6. The LED illuminating device according to claim 5, further comprising,
a capacitor that is connected in parallel between output terminals of the power source output unit and that removes higher harmonic components.

7. The LED illuminating device according to claim 6, wherein, the power source output unit includes a switching element.

8. The LED illuminating device according to claim 6, wherein the output terminals of the direct current power source include a pair of power feeding terminals, and an integrated LED module include the LED, the current limiting circuit, and a pair of power receiving terminals connected to the pair of power feeding terminals, one of the power receiving terminals is connected one end of the LED via the current limiting circuit, and the other power receiving terminal is connected to the other end of the LED.

9. The LED illuminating device according to claim 8, wherein the power feeding terminals are arranged within a socket, and are detachably connected to the power receiving terminals.

10. The LED illuminating device according to claim 6, , wherein the current limiting circuit includes a constant current circuit.

11. The LED illuminating device according to claim 6, wherein the power source input unit further comprises a bridge-type full-wave rectifying circuit, a smoothing capacitor, and a switching element, and a current detector that is connected in series to the switching element performs a constant-current control of the switching element by a negative feedback control.

12. The LED illuminating device according to claim 10, wherein the power source output unit continues operation, in a non-loaded state as the LED is dismounted from the power source output unit, and an electric charge is accumulated in the capacitor, and
the electric charge in the capacitor flows into the LED via the current limiting circuit that performs a constant-current operation at or below a predetermined current upper limit value as the LED is mounted to the power source output: units in operation.

13. The LED illuminating device according to claim 5, wherein the current limiting circuit further comprises a resistor and a timer, and
the resistor is short-circuited after the timer measures time during a predetermined time since a load current starts flowing, after the LED is mechanically mounted to the direct current power source.

14. The LED illuminating device according to claim 5,
wherein the current limiting circuit has a negative characteristic thermistor.

15. The LED illuminating device according to claim 5, further comprising,
a safety circuit that has a temperature fuse which is connected in series to a conductor that connects between the direct current power source and the LED.
